**Europäisches Patentamt**

**European Patent Office**

**Office européen des brevets**

(19)

(11) Veröffentlichungsnummer : **0 397 748 B1**

(12) # EUROPÄISCHE PATENTSCHRIFT

(45) Veröffentlichungstag der Patentschrift :
**29.01.92 Patentblatt 92/05**

(51) Int. Cl.$^5$ : **G01D 3/02, G01L 23/08**

(21) Anmeldenummer : **89901935.0**

(22) Anmeldetag : **02.02.89**

(86) Internationale Anmeldenummer :
**PCT/DE89/00062**

(87) Internationale Veröffentlichungsnummer :
**WO 89/07241 10.08.89 Gazette 89/18**

(54) **EINRICHTUNG ZUR ERFASSUNG EINER PULSIERENDEN GRÖSSE BEI EINER BRENNKRAFTMASCHINE.**

(30) Priorität : **04.02.88 DE 3803276**

(43) Veröffentlichungstag der Anmeldung :
**22.11.90 Patentblatt 90/47**

(45) Bekanntmachung des Hinweises auf die
Patenterteilung :
**29.01.92 Patentblatt 92/05**

(84) Benannte Vertragsstaaten :
**DE FR GB IT**

(56) Entgegenhaltungen :
**DE-A- 3 202 818**
**DE-A- 3 212 561**
**US-A- 3 977 239**
**US-A- 4 412 520**

(56) Entgegenhaltungen :
**ISA Transactions, vol. 24, No. 2, 1985, Research Triangle Park, NC (US), D.R. Englund et al.: "The infinite line pressure probe", pages 11-19**
**Funkschau, No. 26, December 1982, München, (DE), F. Heintz: "Sensoren im Kraftfahrzeug", pages 46-69**

(73) Patentinhaber : **ROBERT BOSCH GmbH**
**Postfach 10 60 50**
**W-7000 Stuttgart 10 (DE)**

(72) Erfinder : **CHROBACZEK, Martin**
**Wiesentalstrasse 1c**
**W-7000 Stuttgart 70 (DE)**
Erfinder : **DENZ, Helmut**
**Augustenstrasse 41**
**W-7000 Stuttgart 10 (DE)**
Erfinder : **ROTH, Andreas**
**Mühlackerstrasse 108**
**W-7130 Mühlacker 3 (DE)**
Erfinder : **HEIM, Hans**
**Weidenbrunnen 91B**
**W-7000 Stuttgart 50 (DE)**

EP 0 397 748 B1

## Beschreibung

### Stand der Technik

Die Erfindung geht aus von einer Einrichtung nach der Gattung des Hauptanspruchs.

Es ist bekannt, daß wesentliche Größen bei Brennkraftmaschinen, wie beispielsweise der Unterdruck im Ansaugrohr quasikontinuierliche Größen sind, die im Arbeitstakt der Brennkraftmaschine pulsieren bzw. periodisch schwanken. Zur Regelung der Brennkraftmaschine wird jedoch der Mittelwert dieser Größen benötigt.

Einrichtungen zum Erfassen einer periodisch schwankenden Größe, beispielsweise des Unterdrucks im Ansaugrohr, und zur Bestimmung des Mittelwerts dieser Größe sind bereits bekannt. So wird in der DE-OS 32 23 328 der Druck einmal pro Zündabstand zündungssynchron gemessen und aus dem so erhaltenen Augenblickswert des Druckes der Mittelwert berechnet. Bei einer Phasenverschiebung des Drucksignals die beispielsweise von Kraftstoffkondensaten, die sich im Schlauch zwischen Saugrohr und Druckgeber niederschlagen können, verursacht wird, führt die in der DE-OS 32 23 328 vorgeschlagene Lösung jedoch zu Fehlern bei der Mittelwertbildung.

In der DE-OS 32 12 561 wird der Saugrohrdruck durch winkelfeste Zweifachabtastung pro Zündabstand ermittelt. Eine Zweifachabtastung des Saugrohrdruckes pro Zündabstand würde bei nur vorhandener Grundschwingung genügen, den exakten Mittelwert des Saugrohrdruckes zu ermitteln. Bei gewissen Drehzahlen sind jedoch dem periodischen Saugrohrdruckverlauf noch höherfrequente Anteile überlagert, die dazu führen können, daß selbst bei Zweifachabtastung noch Fehler bei der Mittelwertbildung auftreten können.

### Vorteile der Erfindung

Die erfindungsgemäße Einrichtung mit den Merkmalen des Hauptanspruchs hat demgegenüber den Vorteil, daß durch Dämpfung, entweder der pulsierenden Größe selbst oder aber des Ausgangssignales eines Sensors, der eine pulsierende Größe erfaßt, ein Signalverlauf erhalten wird, der für alle Drehzahlen nahezu sinusförmig bzw. quasisinusförmig mit der Periodendauer des Zündabstandes ist. Durch die Zweifachabtastung pro Zündabstand bzw. Periodendauer der pulsierenden Größe kann damit aus diesem Signalverlauf in jedem Drehzahlbereich und bei jeder Phasenlage ein fehlerfreier Mittelwert gebildet werden.

Ist die pulsierende Größe der Saugrohrdruck, so kann durch Filterung des Saugrohrdruckes mittels eines pneumatischen Filters für alle Drehzahlen ein nahezu sinusförmiger Druckverlauf am Drucksensor erhalten werden.

Durch eine geeignete Ausgestaltung des pneumatischen Filters kann verhindert werden, daß Kondensat zum Drucksensor gelangt und zu einer Zerstörung des Drucksensors führt. Ein weiterer Vorteil ist, daß der vom Drucksensor beherrschte Maximaldruck bzw. der beherrschbare Druckbereich nicht unnötig groß sein muß, da die Pulsationen nur gedämpft zum Sensor gelangen.

Ist vorgesehen, den Drucksensor im Steuergerät anzuordnen, wird das pneumatische Filter mittels eines zusätzlichen Schlauches variabler Länge mit dem Saugrohr verbunden. Dadurch kann das Steuergerät an beliebiger Stelle eingebaut werden, ohne daß die Dimensionierung des pneumatischen Filters verändert werden muß.

Bei Drucksensoren, die außerhalb des Steuergerätes angeordnet sind, kann ein besonders einfaches pneumatisches Filter, das lediglich aus einer Drossel und einem kurzen Schlauch besteht, verwendet werden.

Anstelle eines pneumatischen Filters zur Glättung des Saugrohrdrucks am Eingang des Drucksensors kann auch ein elektrisches bzw. elektronisches Filter zur Glättung des Sensorausgangssignals verwendet werden.

Besonders vorteilhaft ist, daß auch andere pulsierende Größen mittels eines dem jeweiligen Sensor nachgeschalteten elektrischen bzw. elektronischen Filters so gedämpft werden können, daß ein quasisinusförmiges Signal entsteht. Ein nachgeschaltetes elektronisches Filter ist jedoch nur bei Sensoren mit näherungsweise linearer Kennlinie vorteilhaft, da stark gekrümmte Kennlinien sonst zu einem Mittelwertfehler führen.

Weiterhin ist vorteilhaft, daß der Sensor selbst so ausgebildet werden kann, daß die Filtereigenschaften im Sensor selbst enthalten sind. So kann z.B. ein Heißfilm-Luftmassenmesser in seiner thermischen Eigenschaft so abgestimmt werden, daß höherfrequente Pulsationen des Luftmassenstroms gefiltert werden und nur noch die Grundschwingung im Ausgangssignal enthalten ist.

Durch jede genannte Art der Filterung kann auf vorteilhafte Weise ein bei allen Drehzahlen quasi-sinusförmiges Signal erzeugt werden, aus dem durch Zweifachabtastung pro Zündabstand in jedem Drehzahlbereich ein fehlerfreier Mittelwert gebildet werden kann.

Durch die in den Unteransprüchen aufgeführten Maßnahmen sind vorteilhafte Weiterbildungen der im Hauptanspruch angegebenen Einrichtung möglich.

Zeichnung

Die Erfindung ist in der Zeichnung dargestellt und wird in der folgenden Beschreibung näher erläutert. Es zeigen die Figuren 1a bis c repräsentativ für andere pulsierende Größen den Verlauf des Saugrohrdrucks über der Kurbelwellenwinkelstellung °KW bzw. der Zeit t bei verschiedenen Betriebsbedingungen, Figur 2 zeigt den prinzipiellen Aufbau einer Ausführungsform der erfindungsgemäßen Einrichtung, bei der als Sensor ein Drucksensor innerhalb des Steuergerätes angeordnet ist, Figur 3 zeigt ein Ausführungsbeispiel der erfindungsgemäßen Einrichtung mit einem Drucksensor, der außerhalb des Steuergerätes befestigt ist und Figur 4 zeigt ein Ausführungsbeispiel der Signalauswertung mit einem Heißfilm-Luftmassenmesser(HFM) als Sensor.

Beschreibung der Ausführungsbeispiele

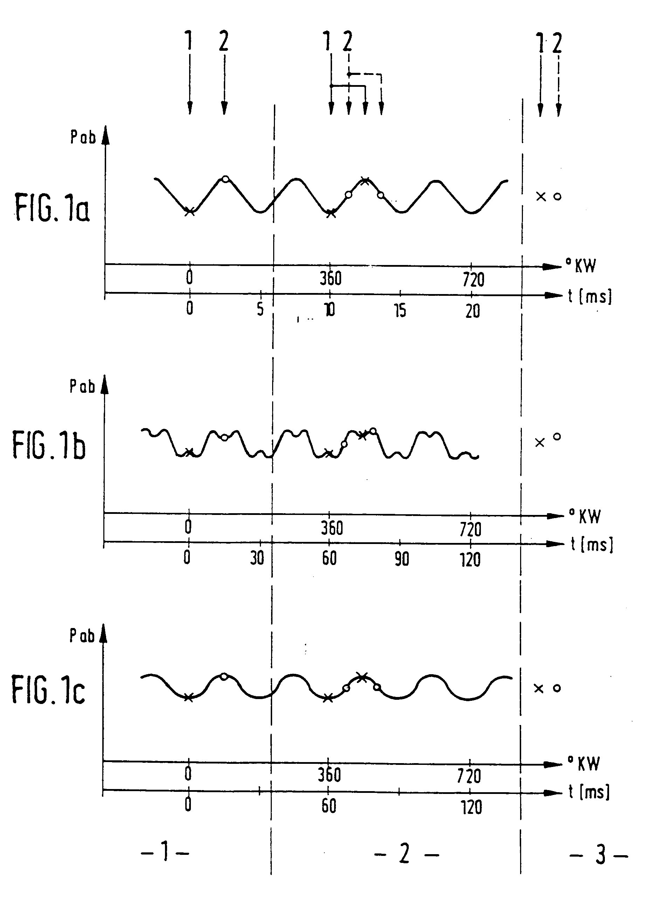

In den Figuren 1a bis c ist der Saugrohrdruck einer Vierzylinder-Brennkraftmaschine über dem Kurbelwellenwinkel bzw. der Zeit aufgetragen. Der Zündabstand entspricht einer Periode des Saugrohrdrucksignals, bei einer Vierzylinder-Brennkraftmaschine also 180° KW. In einem Bereich 1 der Figuren 1a bis c ist das Beispiel einer zündungsynchronen Druckerfassung einmal pro Zündung in einer festen Winkellage dargestellt. In Grad KW ausgedrückt, wird bei der Vierzylinder-Brennkraftmaschine also der Druck alle 180° erfaßt.

Durch die Symbole x und o sind zwei verschiedene Winkellagen markiert, bei denen der Augenblickswert des Druckes maximal vom Mittelwert abweicht. Wird der Druck bei x erfaßt, dann ist der ermittelte Wert kleiner als der Mittelwert, bei o wäre er größer.

In einem Bereich 2 ist das Beispiel einer zündungssynchronen Druckerfassung zweimal pro Zündung, in zwei winkelfesten Kurbelwellenpositionen dargestellt. Bei einer Vierzylinder-Brennkraftmaschine wird der Saugrohrdruck also alle 90° KW erfaßt. Die Symbole x und o markieren zwei verschiedene Winkellagen, bei denen der Augenblickswert des Saugrohrdrucks erfaßt werden kann, d.h. es wird entweder immer bei x oder immer bei o abgetastet. Im Bereich 3 ist der Mittelwert der bei der Zweifachabtastung in dem im Bereich 2 angegebenen Punkten erhaltenen Meßwerte durch die Markierungen x und o angegeben.

Figur 1a repräsentiert den ungefilterter Saugrohrdruckverlauf über dem Kurbelwellenwinkel °KW bzw. der Zeit t bei einer hohen Drehzahl, beispielsweie bei 6000 Umdrehungen pro Minute, wo bei vielen Motoren im wesentlichen nur eine Grundschwingung vorliegt. Der im Bereich 3 skizzierte Mittelwert der aus den im Bereich 2 skizzierten Meßwerten x,x bzw. o,o berechnet wird, entspricht dem tatsächlichen Mittelwert des Saugrohrdrucks. Figur 1b zeigt den ungefilterten Saugrohrdruckverlauf über den Kurbelwellenwinkel für eine niedrige bis mittlere Drehzahl, beispielsweise 2000 Umdrehungen pro Minute. Bei niedriger und mittlerer Drehzahl sind der Grundfrequenz der Saugrohrdruckoszillationen noch höherfrequente Anteile überlagert, die dazu führen, daß der durch winkelfeste Zweifachabtastung im halben Zündabstand in den durch x und o repräsentierten Kurbelwinkelpositionen und anschließender Mittelwertbildung erhaltene Saugrohrdruckwert nicht unbedingt dem tatsächlichen Mittelwert entspricht. Figur 1c zeigt den gefilterten Saugrohrdruckverlauf über dem Kurbelwellenwinkel für die gleiche Drehzahl wie 1b. Dieser gefilterte Saugrohrdruckverlauf wird entweder durch die Vorschaltung eines pneumatischen Filters vor den Drucksensor oder durch elektronische Filterung des Drucksensor-Ausgangssignals erreicht. Durch geeignete Dimensionierung des Filters wird erreicht, daß auch bei kleinen Drehzahlen vom Drucksensor wieder ein nahezu sinusförmiges Ausgangssignal des Drucksensors erreicht wird. Die winkelfeste Zweifachabtastung pro Zündabstand bzw. Periodenabstand führt damit wieder zu einem korrekten Mittelwert. Figur 1c zeigt zwei aus Abtastungen in den Punkten x,x bzw. o,o erhaltene Mittelwerte des Saugrohrdrucks.

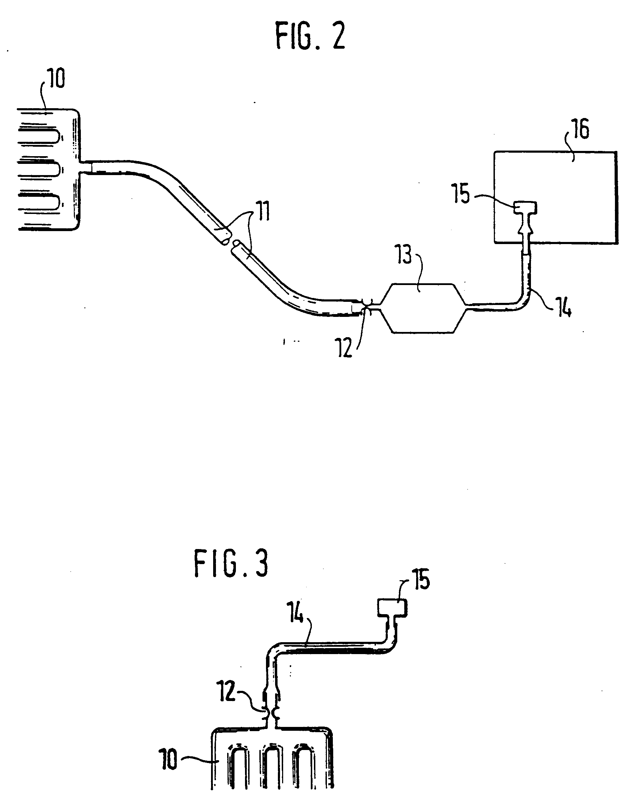

Figur 2 zeigt ein Ausführungsbeispiel einer erfindungsgemäßen Einrichtung mit einem pneumatischen Filter, wobei die zu erfasssende pulsierende Größe der Saugrohrdruck ist. Vom Saugrohr 10 führt ein Schlauch variabler Länge 11 (< 3m) und zur Vermeidung unerwünschter Verzögerung des Druckanstiegs ausreichend großem Durchmesser von z.B. 5 mm zu einer Drossel 12 am Eingang des Kondensatabscheiders 13. Der Kondensatabscheider 13 und die Drossel 12 bilden dabei ein pneumatisches Filter mit einer Zeitkonstante von etwa 20 ms. Ein solcher Wert für die Zeitkonstante des Filters hat sich bei einer schnellstmöglichen Drosselklappenöffnung von 50 ms als akzeptabel erwiesen. Vom Kondensatabscheider 13 führt ein kurzer Schlauch fester Länge (10 bis 20 cm) 14 mit einem Durchmesser von 3 mm zum Druckfühler 15, der direkt in das Steuergerät 16 eingebaut ist.

Die Dimensionierung der Drossel 12 und des Kondensatabscheiders 13, die das pneumatische Filter bilden, werden so gewählt, daß der gefilterte Saugrohrdruck, der am Druckfühler 15 herrscht, bei kleinen Drehzahlen eine sinusförmige Pulsation aufweist. In diesem Fall ist gewährleistet, daß bei zweimaliger Druckabtastung pro Zündung, der exakte Mittelwert des Saugrohrdrucks berechenbar ist. Die Optimierung der Maße der Drossel und des Kondensatabscheiders erfolgt auf experimentellem Wege. Da das pneumatische Filter 12, 13 zusammen mit dem kurzen Schlauch 14 unabhängig vom Einbauort das Steuergerätes eine gleichbleibende Geometrie aufweist, muß die Anpassung des pneumatischen Filters nur einmal erfolgen.

Der Kondensatabscheider 13 soll bevorzugt an der tiefsten Stelle der Einrichtung eingebaut werden. Für die Beseitigung eventuell anfallender Kondensate sind Mittel vorgesehen, die im Ausführungsbeispiel nach Figur 2 nicht dargestellt sind (z.B. Verdunstung der Kondensate durch geeignete Wärmezufuhr).

In einem speziellen Ausführungsbeispiel ist die Druckleitung vom Steuergerät zum Saugrohr stetig fallend um eine Zerstörung des Drucksensors durch Kondensate zu vermeiden.

Figur 3 zeigt ein zusätzliches Ausführungsbeispiel, bei dem der Drucksensor bzw. Druckfilter 15 außerhalb des Steuergerätes 16 an der Karosserie der Brennkraftmaschine befestigt ist. Dabei ist der Drucksensor 15 über einen Schlauch 14, der dem kurzen Schlauch 14 nach Figur 2 entspricht, mit dem Saugrohr 10 verbunden, wobei am Saugrohr 10 eine Drossel 12 vorgesehen ist.

Die Drossel 12 und der Schlauch 14 bilden das pneumatische Filter, das die im Saugohr auftretenden Druckschwankungen dämpft und damit dem Drucksensor 15 einen auswertbaren, etwa quasi-sinusförmigen Druckverlauf zuführt. Die Zeitkonstante des pneumatischen Filters (Filterkonstante) beträgt etwa 20 ms.

Da der Drucksensor 15 nicht im Steuergerät 16 untergebracht werden muß, kann er an einer wählbaren Stelle der Karosserie der Brennkraftmaschine befestigt werden, damit kann unabhängig vom Typ der Brennkraftmaschine die Schlauchlänge des Schlauches 14 bzw. der Durchmesser und damit auch das Volumen dieses Schlauches so gewählt werden, daß für eine gegebene Brennkraftmaschine ein konstantes Schlauchvolumen erhalten wird. Mittels einer Drossel am Saugrohr in Vorbindung mit dem quasikonstanten Schlauchvolumen kann demnach das pneumatische Filter auf die gewünschte Dämpfung abgestimmt werden, unabhängig vom Typ der Brennkraftmaschine.

In einem weiteren Ausführungsbeispiel ist der Drucksensor über eine Druckleitung ohne spezielle Filtriereinrichtungen mit dem Saugrohr verbunden. Hier muß dem Druckfühler das erwähnte elektronische Filter nachgeschaltet werden.

Im Steuergerät wird aus den beiden, zweimal pro Zündung bzw. Periode in festen Kurbelwellenwinkellagen (winkelsynchron) abgetasteten Druckwerten der Mittelwert ermittelt, der unabhängig von eventuell auftretenden Phasenverschiebungen der Saugrohrdruckpulsationen stets dem exakten Mittelwert entspricht. Die Berechnung des Mittelwertes erfolgt unmittelbar nach Vorliegen des zweiten Druckwertes. Aus dem Mittelwert des Druckes wird dann der jeweils zugehörige Lastzustand bestimmt.

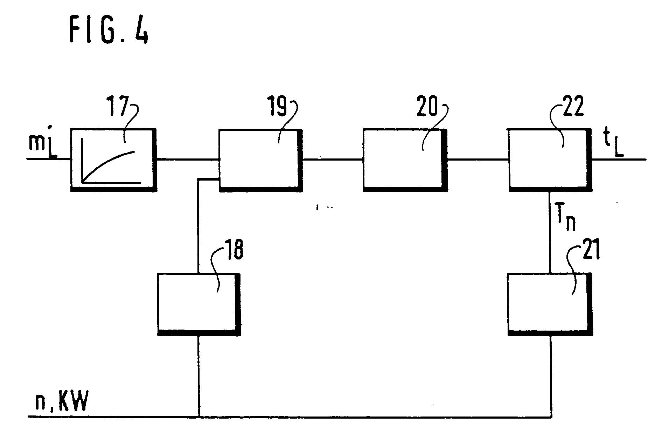

In Figur 4 ist ein Ausführungsbeispiel der Erfindung dargestellt, bei dem der angesaugte Luftmassentrom $m'_L$, der bedingt durch die einzelnen Saughübe eine pulsierende Größe ist, mittels eines Heißfilm-Luftmassensensors bzw. Heißfilm-Luftmassenmessers 17 gemessen wird.

Bedingt durch Resonanzen im Saugrohr ist der angesaugte Luftmassenstrom keine rein sinusförmige Schwingung. Daher wird der Heißfilm-Luftmassensensor 17 so abgestimmt, daß in seinem Ausgangssignal die Oberschwingungen die dem angesaugten Luftmassenstrom überlagert sind, möglichst vollständig unterdrückt werden. Der Heißfilm-Luftmassensensor liefert daher ein quasi-sinusförmiges Ausgangssignal, das dem in der Amplitude gedämpften angesaugten Luftmasssenstrom $m'_L$ entspricht.

Die Abstimmung des Heißfilm-Luftmassensensors 17 erfolgt durch Festlegung seiner thermischen Zeitkonstante. Ca. 20 bis 50 ms ist als geeeigneter Wert für diese Zeitkonstante besonders geeignet, da bei einer solchen Zeitkonstante auch gewährleistet ist, daß bei Laständerungen in ausreichend schneller Zeit eine Änderung des Ausgangssignales resultiert.

Die Filterung bzw. Dämpfung der zu messenden Größe erfolgt in diesem Ausführungsbeispiel im Sensor, dem Heißfilm-Luftmassensensor selbst, so daß keine separate Filtriereinrichtung bzw. Dämpfungseinrichtung benötigt wird.

Das vom Heißfilm-Luftmassensensor 17 gelieferte Ausgangssignal wird im Ausführungsbeispiel nach Figur 4 in einer Abtast- und Linearisiereinrichtung 19 im halben Zündabstand abgetastet. Die dazu erforderlichen winkelfesten Triggermarken werden aus dem Drehzahl/Kurbelwellensignal n/KW in einer Triggereinrichtung 18 erzeugt.

Wegen der stark nichtlinearen Kennlinie des Heißfilm-Luftmassensensors 17 werden die abgetasteten Werte in Einrichtung 19 linearisiert, so daß Abtastwerte vorliegen, die direkt proportional zum Luftmassenstrom sind.

Die Abtast- und Linearisierungseinrichtung 19 liefert einen Meßwert pro halben Zündabstand, aus jeweils zwei Meßwerten wird in der Mittelwertstufe 20 ein Mittelwert gebildet. Durch Multiplikation mit der Periode Tn und Division durch eine Anpassungskonstante $K_{HFM}$ ergibt sich das Lastsignal $t_L$. Dabei erfolgen die beiden genannten Rechenoperationen in einem Block 22, an dessen Ausgang das Lastsignal $t_L$ erzeugt wird und dem die in einer Stufe 21 erzeugte Periode Tn zugeführt wird. Die Einrichtungen 18 bis 22 können in einen Steuergerät enthalten sein, $t_L$ wird im Steuergerät weiter verarbeitet, z.B.zur Berechnung der Einspritzzeit.

Die in Figur 4 aufgezeigte Auswerteschaltung kann entsprechend auch für die Ausfürungsbeispiele nach Figur 2 oder 3 eingesetzt werden. Dabei erfolgt in Stufe 19 neben der Abtastung auch noch eine Offsetkorrektur.

Zur Ermittlung des Lastsignlas wird der gemittelte Saugrohrdruck in Stufe 22 mit einem von der Drehzahl abhängigen Kennfeld multipliziert und durch eine Anpassungskonstante $K_{DF}$ dividiert.

Die in den Ausführungsbeispielen genannten Filtriereinrichtungen können alle auch als Dämpfungseinrichtungen verstanden werden, da die Herausfilterung von Oberwellen auch zu einer Dämpfung der Signale führt.

Anstatt eines Heißfilm-Luftmassenmessers kann auch ein anderer Sensor zur Bestimmung des Luftmassenstromes eingesetzt werden, Voraussetzung ist, daß er so abstimmbar ist, d.h. daß seine Zeitkonstante so wählbar ist, daß die Oberschwingungen des Luftmassenstromes herausgefiltert werden können.

## Patentansprüche

1. Einrichtung zur Erfassung einer pulsierenden Größe bei einer Brennkraftmaschine durch winkelsynchrone Meßwertabtastung im halben Periodenabstand der pulsierenden Größe, dadurch gekennzeichnet, daß einem Sensor (15, 17) eine Filtriereinrichtung und/oder eine Dämpfeinrichtung zugeordnet ist und daß aus zwei Meßwerten pro Periode der Mittelwert gebildet wird.

2. Einrichtung zur Erfassung einer pulsierenden Größe nach Anspruch 1, dadurch gekennzeichnet, daß die pulsierende Größe so gefiltert und/oder gedämpft wird, daß sie einen quasi-sinusförmigen Verlauf hat.

3. Einrichtung zur Erfassung einer pulsierenden Größe nach Anspruch 1 oder 2, dadurch gekennzeichnet, daß die Filtriereinrichtung und/oder Dämpfeinrichtung pneumatisch ausgeführt ist.

4. Einrichtung zur Erfassung einer pulsierenden Größe nach Anspruch 1 oder 2, dadurch gekennzeichnet, daß dem Sensor eine elektronische Filtriereinrichtung und/oder Dämpfeinrichtung nachgeschaltet ist.

5. Einrichtung zur Erfassung einer pulsierenden Größe nach Anspruch 1, dadurch gekennzeichnet, daß die zweimal pro Periode durchgeführte Messungen der pulsierenden Größe in beliebig festlegbaren Kurbelwellenwinkelpositionen durchgeführt werden, wobei der Abstand dieser Kurbelwellenwinkelpositionen gleich der halben Periode ist.

6. Einrichtung zur Erfassung einer pulsierenden Größe nach Anspruch 1, dadurch gekennzeichnet, daß bei einer n-Zylinder-Brenkraftmaschine die Abtastung im Abstand von (720° KW)/2n erfolgt.

7. Einrichtung zur Erfassung einer pulsierenden Größe nach Anspruch 1, dadurch gekennzeichnet, daß die Filtervorrichtung ein pneumatisches Filter ist, das wenigstens einen Kondensatabscheider und eine Drossel am Eingang des Kondensatabscheiders enthält, die vorzugsweise an der tiefsten Stelle zwischen Saugrohr (10) und Sensor (15) eingebaut sind..

8. Einrichtung zur Erfassung einer pulsierenden Größe nach Anspruch 1, dadurch gekennzeichnet, daß die Filtervorrichtung mit einem kurzen Schlauch so mit dem Sensor verbunden ist, daß das System pneumatisches Filter, kurzer Schlauch (14), Sensor (15), eine gleichbleibende Geometrie aufweist.

9. Einrichtung zur Erfassung einer pulsierenden Größe nach einem der vorhergehenden Ansprüche, dadurch gekennzeichnet, daß der Sensor (15) ins Steuergerät eingebaut oder außerhalb des Steuergeräts angeordnet sein kann.

10. Einrichtung zur Erfassung einer pulsierenden Größe nach einem der Ansprüche 1, 2, 5, 6, dadurch gekennzeichnet, daß die Filtervorrichtung ein pneumatisches Filter ist, das wenigstens aus einer Drossel am Saugrohr und einem damit in Verbindung stehenden Schlauch mit wählbarer Länge und/oder wählbarem Querschnitt, zur Realisierung einer bestimmten, für eine gegebene Brennkraftmaschine immer gleichbleibende Filterkonstante besteht, wobei der Schlauch mit dem Sensor (15) verbunden ist und der Sensor (15) außerhalb des Steuergerätes angeordnet ist.

11. Einrichtung zur Erfassung einer pulsierenden Größe nach einem der vorhergehenden Ansprüche, dadurch gekennzeichnet, daß die pulsierende Größe der Saugrohrdruck ist und der Sensor (15) ein Drucksensor ist.

12. Einrichtung zur Erfassung einer pulsierenden Größe nach einem der Ansprüche 1, 2, 5, 6, dadurch gekennzeichnet, daß die pulsierende Größe der angesaugte Luftmassenstrom ist und daß ein Sensor (17) eingesetzt wird, vorzugsweise ein Heißfilm-Luftmassensensor, dessen thermische Zeitkonstante so festlegbar ist, daß sein Ausgangssignal quasi-sinusförmig ist.

## Claims

1. Device for detecting a pulsating variable in an internal combustion engine by means of angle-synchronous measurement value sampling at half the period interval of the pulsating variable, characterised in that a sensor (15, 17) is associated with a filtering device and/or a damping device and that the mean value is formed from two measurement values per period.

2. Device for detecting a pulsating variable according to Claim 1, characterised in that the pulsating variable is filtered and/or damped in such a manner that it has a quasi-sinusoidal variation.

3. Device for detecting a pulsating variable according to Claim 1 or 2, characterised in that the filtering device and/or damping device is constructed to be pneumatic.

4. Device for detecting a pulsating variable according to Claim 1 or 2, characterised in that the sensor is followed by an electronic filtering device and/or damping device.

5. Device for detecting a pulsating variable according to Claim 1, characterised in that the measurements of the pulsating variable, which are carried out twice per period, are carried out at arbitrarily definable crankshaft angle positions, the distance between these crankshaft angle positions being equal to half the period.

6. Device for detecting a pulsating variable according to Claim 1, characterised in that the sampling occurs at an interval of $(720° \text{ KW})/2n$ in an n-cylinder internal combustion engine.

7. Device for detecting a pulsating variable according to Claim 1, characterised in that the filtering device is a pneumatic filter which contains at least one condensate precipitator and a throttle at the input of the condensate precipitator which are preferably installed at the lowest point between intake pipe (10) and sensor (15).

8. Device for detecting a pulsating variable according to Claim 1, characterised in that the filtering device is connected to the sensor by means of a short hose in such a manner that the pneumatic filter, short hose (14), sensor (15) system exhibits a constant geometry.

9. Device for detecting a pulsating variable according to one of the preceding claims, characterised in that the sensor (15) can be installed in the control device or arranged outside the control device.

10. Device for detecting a pulsating variable according to one of Claims 1, 2, 5, 6, characterised in that the filtering device is a pneumatic filter which consists at least of a throttle at the intake pipe and a hose connected thereto, with selectable length and/or selectable cross-section, for implementing a particular filter constant which is always constant for a given internal combustion engine, the hose being connected to the sensor (15) and the sensor (15) being arranged outside the control device.

11. Device for detecting a pulsating variable according to one of the preceding claims, characterised in that the pulsating variable is the intake pipe pressure and the sensor (15) is a pressure sensor.

12. Device for detecting a pulsating variable according to one of Claims 1, 2, 5, 6, characterised in that the pulsating variable is the air-flow stream taken in and that a sensor (17), preferably a hot-film air-flow sensor, is used the thermal time constant of which can be defined in such a manner that its output signal is quasi-sinusoidal.

**Revendications**

1. Dispositif pour détecter une grandeur pulsatoire dans un moteur à combustion interne par exploration en synchronisme angulaire de la valeur de mesure dans un demi intervalle de période de la grandeur pulsatoire, dispositif caractérisé en ce qu'à un détecteur (15, 17) est associé un dispositif de filtration et/ou un dispositif d'amortissement, et en ce que la valeur moyenne est formée à partir de deux valeurs de mesure par période.

2. Dispositif pour détecter une grandeur pulsatoire selon la revendication 1, caractérisé en ce que la grandeur pulsatoire est filtrée et/ou amortie de façon qu'elle ait une évolution quasi sinusoïdale.

3. Dispositif pour détecter une grandeur pulsatoire selon la revendication 1 ou la revendication 2, caractérisé en ce que le dispositif de filtration et/ou le dispositif d'amortissement est réalisé pneumatiquement.

4. Dispositif pour détecter une grandeur pulsatoire selon la revendication 1 ou la revendication 2, caractérisé en ce qu'à la suite du détecteur est branché un dispositif électronique de filtration et/ou un dispositif électronique d'amortissement.

5. Dispositif pour détecter une grandeur pulsatoire selon la revendication 1, caractérisé en ce que les mesures effectuées deux fois par période de la grandeur pulsatoire, sont effectuées dans des positions angulaires de l'arbre de vilebrequin susceptibles d'être fixées de façon quelconque, l'intervalle entre ces positions angulaires de l'arbre de vilebrequin étant cependant égal à la demi période.

6. Dispositif pour détecter une grandeur pulsatoire selon la revendication 1, caractérisé en ce que dans le cas d'un moteur à combustion interne à n cylindres, l'exploration s'effectue à l'intervalle de $(720° \text{ KW})/2n$.

7. Dispositif pour détecter une grandeur pulsatoire selon la revendication 1, caractérisé en ce que le dispositif de filtration est un filtre pneumatique qui comprend au moins un séparateur de condensats et un étranglement à l'entrée de ce séparateur de condensats, qui sont de préférence installés à l'emplacement le plus bas entre la tubulure d'aspiration (10) et le détecteur (15).

8. Dispositif pour détecter une grandeur pulsatoire selon la revendication 1, caractérisé en ce que le dispositif de filtration est relié au détecteur par un tuyau souple court, de façon que le système pneumatique constitué par le filtre, le tuyau souple court (14), le détecteur (15) ait une géométrie constante.

9. Dispositif pour détecter une grandeur pulsatoire selon une des précédentes revendications, caractérisé en ce que le détecteur (15) peut être installé dans l'appareil de commande, ou bien être disposé à l'extérieur de cet appareil de commande.

10. Dispositif pour détecter une grandeur pulsatoire, selon une des revendications 1, 2, 5, 6, caractérisé en ce que le dispositif de filtration est un filtre pneumatique, qui est constitué au moins par un étranglement sur la tubulure d'aspiration et un tuyau souple avec une longueur et/ou une section transversale susceptibles d'être choisies pour réaliser une constante de filtre déterminée, toujours la même pour un moteur à combustion interne donné, tandis que le tuyau souple est communication avec le détecteur (15) et que le détecteur (15) est disposé à l'extérieur de l'appareil de commande.

11. Dispositif pour détecter une grandeur pulsatoire selon une des précédentes revendications, caractérisé en ce que la grandeur pulsatoire est la pression dans la tubulure d'aspiration, tandis que le détecteur (15) est un détecteur de pression.

12. Dispositif pour détecter une grandeur pulsatoire selon une des revendications 1, 2, 5, 6, caractérisé en ce que la grandeur pulsatoire est le débit massique d'air aspiré et en ce qu'on met en oeuvre un détecteur (17), de préférence un détecteur de masse d'air à film chaud, dont la constante de temps thermique est susceptible d'être déterminée de façon que le signal de sortie de ce détecteur soit quasi sinusoïdal.

FIG.1a

FIG.1b

FIG.1c

# FIG. 2

# FIG. 3

FIG. 4